(19) Europäisches Patentamt
European Patent Office
Office européen des brevets

(11) Veröffentlichungsnummer: **0 142 798**
**B1**

(12) **EUROPÄISCHE PATENTSCHRIFT**

(45) Veröffentlichungstag der Patentschrift: **27.01.88**

(51) Int. Cl.⁴: **G 11 B 5/702**, C 09 D 5/23, H 01 F 10/10

(21) Anmeldenummer: **84113556.9**

(22) Anmeldetag: **09.11.84**

(54) **Magnetische Aufzeichnungsträger.**

(30) Priorität: **18.11.83 DE 3341699**

(43) Veröffentlichungstag der Anmeldung:
**29.05.85 Patentblatt 85/22**

(45) Bekanntmachung des Hinweises auf die Patenterteilung:
**27.01.88 Patentblatt 88/4**

(84) Benannte Vertragsstaaten:
**DE FR GB NL**

(56) Entgegenhaltungen:
**DE - A - 2 037 605**
**DE - A - 2 255 802**
**DE - B - 2 157 685**
**DE - B - 2 318 910**

(73) Patentinhaber: **BASF Aktiengesellschaft,
Carl-Bosch-Strasse 38, D-6700 Ludwigshafen (DE)**

(72) Erfinder: **Lehner, August, Wachenheimer Strasse 4, D-6701 Roedersheim-Gronau (DE)**
Erfinder: **Kopke, Helmut, Goethestrasse 11, D-6714 Weisenheim (DE)**
Erfinder: **Rolier, Hermann, Schwedlerstrasse 118, D-6700 Ludwigshafen (DE)**
Erfinder: **Balz, Werner, Dr., Kropsburgstrasse 44, D-6703 Limburgerhof (DE)**
Erfinder: **Grau, Werner, Dr., Tuchbleiche 5, D-6712 Bobenheim-Roxheim (DE)**
Erfinder: **Koester, Eberhard, Dr., Max-Slevogt-Strasse 23, D-6710 Frankenthal (DE)**
Erfinder: **Sommermann, Friedrich, Dr., Grimmelshausenstrasse 9, D-7640 Kehl (DE)**

EP 0 142 798 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft magnetische Aufzeichnungsträger aus einem nichtmagnetischen Trägermaterial, das mit einer Magnetschicht aus in Bindemitteln und Zusatzstoffen dispergiertem, feinteiligem anisotropen magnetischen Material versehen ist und wobei das Bindemittel ein Gemisch auf der Basis eines thermoplastischen Polyurethans mit weiteren physikalisch trocknenden Bindemitteln und einem OH-gruppenhaltigen niedermolekularen Polyurethan ist, das mit Polyisocyanaten vernetzt wird.

An Magnetschichten, die in modernen Audio- und Videoaufzeichnungs- und Wiedergabegeräten verwendet werden, werden Anforderungen mehrfacher Hinsicht gestellt. Neben den hohen Anforderungen an die Aufzeichnungs- und Wiedergabeeigenschaften, für die Anwendung von Audiobändern, Videobändern und flexiblen Datenträgern, wird vor allem bezüglich der mechanischen Eigenschaften der Aufzeichnungsträger eine ständige Anpassung und Verbesserung gefordert. Die Magnetschichten müssen flexibel sein, eine hohe Elastizität aufweisen und eine hohe Reissfestigkeit besitzen. Ausserdem wird, zur Vermeidung von Pegeleinbrüchen, zunehmend eine Verringerung der Reibungswerte sowie eine Erhöhung der Abrieb- und Verschleissfestigkeit gefordert.

Die Verminderung der Oberflächenrauhigkeit der Magnetschicht ist bei hochwertigen magnetischen Aufzeichnungsträgern besonders wichtig, da für die Auflösung kleinster Wellenlängen ein besonders enger Band/Kopf-Kontakt erforderlich ist. Daraus ergeben sich die hohen Anforderungen, die an die Verschleissfestigkeit der Bänder gestellt werden, denn eine Beschädigung der Schicht führt zu Pegeleinbrüchen, bzw. der Bandabrieb setzt den Tonkopf zu.

Um diese Fehler zu vermeiden, ist es erforderlich, ausser der Verwendung besonders geeigneter Magnetpigmente, wie Chromdioxid, cobaltdotierten Eisenoxiden und ferromagnetischen Metallteilchen, die in der Magnetschicht insgesamt enthaltenen Materialien so auszuwählen, dass die Magnetschichten neben der besonders hohen remanenten Magnetisierung in der Aufzeichnungsrichtung und bei den geforderten glatten Oberflächen verbesserte mechanische Eigenschaften aufweist. Solche Magnetschichten müssen einen hohen Anteil an magnetisierbarem Material in der Magnetschicht aufweisen, und diese magnetisierbaren nadelförmigen Teilchen müssen sich in der Magnetschicht sehr gut entlang der vorgesehenen Aufzeichnungsrichtung orientieren lassen. Gerade die Verbesserung der genannten Eigenschaften, wie Oberflächenrauhigkeit, Remanenz und Ausrichtungsgrad bei gleichzeitig hervorragenden mechanischen Eigenschaften sind bei ein und demselben magnetischen Material im hohen Masse von den zur Herstellung der Magnetschicht verwendeten Bindemittel und Zusatzstoffen abhängig. Von den Zusatzstoffen sind in erster Linie die sogenannten Gleitmittel, Hydrophobierungsmittel und Dispergiermittel zu nennen, welche durch ihren Einsatz die elektroakustischen, magnetischen und mechanischen Eigenschaften der Bänder beeinflussen.

Zur Lösung dieser Probleme wurden viele unterschiedliche Lösungswege untersucht. So wurden Polyurethanelastomere z.B. gemäss der US-PS 3144352 mit Vinylidenchlorid-Acrylnitril-Copolymeren, gemäss der DE-AS 1282700 bzw. DE-OS 2318910 und DE-OS 2255802 mit Vinylchlorid-Copolymeren, gemäss der DE-OS 2037605 mit Vinylchlorid-Vinylacetat wurde gemäss der DE-OS 2157685 mit Polyvinylformal kombiniert. Bekannt ist auch die Kombination mit Phenoxyharzen. Zur Verbesserung der mechanischen Eigenschaften können die Bindemittel dieser Kombination zum Teil mit Polyisocyanat vernetzt werden.

Von Nachteil ist bei all diesen Systemen, dass sie bei den erforderlichen Oberflächenbehandlungen bei Temperaturen von 50 bis 70 °C eine zu geringe Thermoplastizität aufweisen, so dass der Glättungsvorgang nur zu ungünstigen Oberflächenrauhigkeiten führt. Diese Bindemittelsysteme zeigen beim Dispergieren auch eine relativ schlechte Pigmentbenetzung. Die Summe der Nachteile sind somit schlechte Ablagerungsnoten, geringere Ela- und Magnetwerte und lange Dispergierzeiten. Die Nachteile lassen sich auch nicht durch eine zusätzliche Vernetzung mit Isocyanat beheben. Die Vernetzung führt zwar zu härteren Schichten, nachteilig ist jedoch, dass gleichzeitig auch die Elastizität zurückgeht und der Abrieb nicht oder ungenügend vermindert wird, weil die Vernetzung nicht wie gewünscht überwiegend an das Polymer angebunden wird, sondern zu harten Harnstoffen führen. Dies zeigt sich besonders bei den ganz speziellen Belastungen beim Studioband, beim Audio- und Videoband mit Metallteilchen als magnetischem Material und dem Computerband mit $CrO_2$. Es gilt aber ganz allgemein für alle flexiblen Medien für den Fall, dass die herkömmlichen Zweierkombinationen verwendet werden.

Es bestand daher die Aufgabe, durch eine einfache und sichere Massnahme magnetische Aufzeichnungsträger bereitzustellen, bei denen durch Verwendung von geeigneten Bindemittel-Kombinationen die Pigmentbenetzung verbessert, die Verschleissfestigkeit erhöht und der Abrieb verringert wird. Weiterhin soll durch die Kombination die Oberflächenbehandlung schon bei 50 bis 70 °C durchgeführt werden können. Dies hätte auch Vorteile für die Produktionsqualität, da die als Träger verwendeten Polyesterfolien bei höheren Temperaturen nicht formstabil sind.

Es wurde nun gefunden, dass magnetische Aufzeichnungsträger aus einem nichtmagnetischen Trägermaterial, das mit einer Magnetschicht aus in Bindemitteln und Zusatzstoffen dispergiertem, feinteiligem anisotropem magnetischem Material versehen ist und wobei das Bindemittel ein Gemisch aus einem hochmolekularen, thermoplastischen, in Tetrahydrofuran löslichen, linearen Polyurethan, dessen unpigmentierter Film eine Reissfestigkeit zwischen 40 und 95 $N/mm^2$ und eine

Reissdehnung von 100 bis 1400% aufweist, einem niedermolekularen OH-gruppenhaltigen Polyharnstoffurethan, das als unpigmentierter mit Polyisocyanat vernetzter Film eine Reissfestigkeit von grösser 15 $N/mm^2$, eine Reissdehnung von grösser 30%, einen E-Modul von grösser 150 $N/mm^2$ und eine Pendelhärte von 30 bis 140 s aufweist, und einem weiteren physikalisch trocknenden Bindemittel ist, die Anforderungen erfüllen, wenn das Bindemittelgemisch aus

1. 20 bis 70 Gew.-% eines hochmolekularen, thermoplastischen, in Tetrahydrofuran löslichen linearen Polyurethans mit einem Molekulargewicht zwischen 40000 und 150000, welches aus

1A. 1 Mol eines Polyesterols mit einem Molekulargewicht zwischen 400 und 4000

1B. 0,3 bis 15 Mol eines geradkettigen aliphatischen Diols mit 2 bis 10 Kohlenstoffatomen,

1C. 0 bis 1,5 Mol eines Triols mit 3 bis 10 Kohlenstoffatomen und

1D. 1,25 bis 17 Mol eines Diisocyanats mit 6 bis 30 Kohlenstoffatomen, wobei die Menge an NCO-Gruppen etwa äquivalent der Menge an OH-Gruppen der Summe der Komponenten 1A bis 1C ist, hergestellt worden ist,

2. 5 bis 35 Gew.-% eines Polyvinylformalbindemittels mit einem Vinylformalgruppengehalt von mindestens 65%, oder eines Copolymeren aus 50 bis 95 Gew.-% Vinylchlorid und 5 bis 50 Gew.-% eines mono- oder Diesters eines aliphatischen Diols mit 2 bis 4 Kohlenstoffatomen mit Acrylsäure oder Methacrylsäure, oder eines Phenoxyharzes, dessen Konstitution der Formel

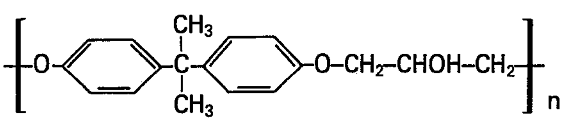 n

mit n annähernd gleich 100 entspricht, oder eines Di- und/oder Triesters der Cellulose mit mindestens einer Carbonsäure mit 1 bis 4 Kohlenstoffatomen, oder einem Copolymerisat aus 91% Vinylchlorid-, 3% Vinylacetat- und 6% Vinylalkoholgrundeinheiten, und

3. 5 bis 50 Gew.-% eines niedermolekularen OH-gruppenhaltigen Polyharnstoffurethans mit mindestens 4 OH-Gruppen und einer OH-Zahl zwischen 30 und 130 und einem Molekulargewicht zwischen 2000 und 30000, welches aus

3.IA 1 Mol eines Polydiols mit einem Molekulargewicht zwischen 400 und 4000,

3.IB 0,2 bis 10 Mol eines Diols mit 2 bis 18 Kohlenstoffatomen,

3.IC 0,1 bis 4 Mol eines primären oder sekundären Aminoalkohols mit 2 bis 20 Kohlenstoffatomen,

3.ID 0 bis 1 Mol eines Triols und

3.II 1,20 bis 13 Mol eines Diisocyanats mit 6 bis 30 Kohlenstoffatomen, wobei der Anteil der NCO-Gruppen des Diisocyanats, bezogen auf die Komponenten 3.IA bis 3.ID, 65 bis 95% der äquivalenten Menge an OH- und NH-Gruppen beträgt, hergestellt worden ist,

besteht und das hochmolekulare Polyurethan und das niedermolekulare Polyharnstoffurethan mit Polyisocyanaten in einem OH:NCO-Verhältnis von 1:0,3 bis 1:2,0 vernetzt worden sind.

Entsprechende Bindemittelmischungen mit einem Anteil von 50 Gew.-% des niedermolekularen Polyharnstoffurethans (Komponente 1) sind auch in der EP-A-O 142796, angemeldet am 9.11.84 unter Beanspruchung der deutschen Priorität vom 18.11.83 und veröffentlicht am 29.5.85 vorgeschlagen worden und sind nicht Gegenstand vorliegender Erfindung.

Die beim erfindungsgemässen Aufzeichnungsträger eingesetzten, mit Polyisocyanaten vernetzten, OH-gruppenhaltigen Polyharnstoffurethanbindemittel (Komponente 3) sind dadurch charakterisiert, dass sie als unpigmentierte vernetzte Filme eine Reissfestigkeit (nach DIN 53455) von grösser 15, vorzugsweise grösser 30 $N/mm^2$, eine Reissdehnung (nach DIN 53455) von grösser 30, vorzugsweise grösser 70% und einen E-Modul (nach DIN 53457) von grösser 150, vorzugsweise grösser 200 $N/mm^2$, aufweisen und die Pendelhärte (nach DIN 53157) zwischen 30 und 140, vorzugsweise 50 bis 110 s, liegt. Die OH-Zahl der Komponenten 3 beträgt 30 bis 130, vorzugsweise 40 bis 120. Das Molekulargewicht (Zahlenmittel) ist zwischen 2000 und 30000, entsprechend einem K-Wert zwischen 17 und 45, vorzugsweise zwischen 2500 und 25000, entsprechend einem K-Wert zwischen 19 und 35. Das Polymere muss unvernetzt bei $\leq 70$ °C, bevorzugt $< 50$ °C unter Druck leicht plastisch verformbar sein.

Beim Aufbau dieser Polymeren hat es sich zur Verbesserung der Pigmentbenetzung als zweckmässig erwiesen, dass die Oh-Endgruppen zum Teil, vorzugsweise über 70% und insbesondere zu mehr als 90% aus folgenden Resten besteht:

$-NH-CO-NR^1-R-OH$ oder

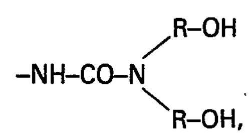

wobei

$R = -(CH_2)-_n$

$R^1 = H, -CH_3, -(CH_2)_n-CH_3$ und

$n = 1$ bis 10

bedeuten.

Mit dieser Massnahme, ebenso wie mit dem Einbau von Triolen in das niedermolekulare, OHgruppenhaltige Polyharnstoffurethan lässt sich der Gehalt an OH-Endgruppen erhöhen, wodurch bei der Vernetzung mit Polyisocyanat der Vernetzungsgrad, entsprechend den Anforderungen an die Magnetschicht, in weiten Grenzen variiert werden kann. Ebenfalls von Vorteil sind die Harnstoffgruppen, welche die Dispergierfähigkeit gegenüber den üblichen magnetischen Materialen erhöhen.

Die im Bindemittelgemisch für die erfindungsgemässen Aufzeichnungsträger als Komponente

1 enthaltenen Polyurethanelastomeren sind bekannt. Sie werden ebenso wie ihre Herstellung u. a. in den DE-ASen 2442763 und 2753694 beschrieben.

Diese als hochmolekulare Bindemittel in den Magnetschichten verwendeten Polyurethane sind dann besonders geeignet, wenn sie einen K-Wert zwischen 50 und 70 und einen Blockpunkt von mindestens 120 °C aufweisen, die Reissdehnung zwischen 100 und 1400% (DIN 53455) und die Reissfestigkeit zwischen 40 und 95 N/mm$^2$ (DIN 53455) liegt. Besitzen diese Polyurethane ausserdem noch OH-Endgruppen, die bei einer Vernetzung leicht zugänglich sind, ist dies von besonderem Vorteil. Die im Bindemittelgemisch für die erfindungsgemässen Aufzeichnungsträger als Komponente 2 enthaltenen physikalisch trocknenden Bindemittel sind ebenfalls bekannt. Es handelt sich hierbei um ein Polyvinylformal-Bindemittel, welches durch Hydrolyse eines Polymerisats eines Vinylesters und anschliessende Umsetzung des Vinylalkohol-Polymeren mit Formaldehyd hergestellt wurde. Die Polyvinylformale haben zweckmässigerweise einen Vinylformalgruppengehalt von mindestens 65 Gew.-% und insbesondere mindestens 80 Gew.-%. Geeignete Polyvinylformale haben einen Gehalt von Vinylalkohol-Gruppen von 5 bis 13 Gew.-%, einen Gehalt an Vinylformal-Gruppen von 80 bis 88 Gew.-%, ein spezifisches Gewicht von ca. 1,2 und eine Viskosität von 50 bis 120 mPa·s, gemessen bei 20 °C mit einer Lösung von 5 g Plyvinylformal in 100 ml Phenol-Toluol (1:1). In gleicher Weise geeignet sind neben dem Polyvinylformal Vinylchlorid-Diol-mono- oder -di(meth)acrylat-Copolymerisate, die sich z. B. in an sich bekannter Weise durch Lösungscopolymerisation oder Suspensionscopolymerisation von Vinylchlorid und dem Diolmonomethacrylat oder -monoacrylat herstellen lassen. Das hierfür zum Einsatz gelangende Diol-mono- oder -di-acrylat oder -methacrylat ist ein Veresterungsprodukt von Acrylsäure odr Methacrylsäure mit der entsprechenden molaren Menge an aliphatischem Diol mit 2 bis 4 C-Atomen, wie Ethylenglykol, 1,4-Butandiol und bevorzugt Propandiol, wobei das Propandiol, vorzugsweise aus 1,3-Propandiol und 0 bis 50 Gew.-% 1,2-Propandiol besteht. Die Copolymerisate haben zweckmässigerweise einen Vinylchloridgehalt von 50 bis 95 Gew.-% und einen Diolacrylat- oder -methacrylat-Gehalt von 5 bis 50 Gew.-%. Besonders geeignete Copolymerisate besitzen vorzugsweise einen Gehalt von 70 bis 90 Gew.-% Vinylchlorid und 10 bis 30 Gew.-% Diolmonoacrylat bzw. Diolmonomethacrylat. Eine 15 %ige Lösung besonders geeigneter Copolymerisate wie der Vinylchlorid-Propandiolmonoacrylat-Copolymerisate in einem Gemisch aus gleichen Volumenteilen von Tetrahydrofuran und Dioxan weist bei 25 °C eine Viskosität von etwa 30 mPa·s auf. Der K-Wert nach H. Fikentscher (Cellulosechemie 30 (1931), S. 58 ff.) der besonders geeigneten Produkten liegt zwischen 30 und 50, vorzugsweise bei etwa 40.

Ausserdem lassen sich als Komponente 2 vorteilhaft Phenoxyharze, deren Konstitution mit der wiederkehrenden Formel

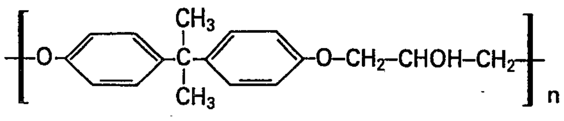

in der n annähernd gleich 100 ist, zu beschreiben ist, einsetzen. Es handelt sich hierbei um Polymere, wie sie in der DE-AS 1295011 beschrieben sind und wie sie unter den Handelsbezeichnungen ®Epikote der Firma Shell Chemical Co. oder unter der Bezeichnung ®Epoxidharz PKHH der Union Carbride Corporation bekannt sind.

In gleicher Weise eignet sich Celluloseester-Bindemittel zur Verwendung als Komponente 2 in dem bezeichneten Bindemittelgemisch. Diese sind Voresterungsprodukte der Cellulose mit Carbonsäuren mit 1 bis 4 Kohlenstoffatomen, wie z. B. Celluloseacetat, Cellulosetriacetat, Celluloseacetopropionat, Celluloseacetobyrat.

Zur Herstellung der Komponente 3 wird als Baustein 3.IA ein Polydiol mit einem Molekulargewicht von 400 bis 4000, bevorzugt von 700 bis 2500, eingesetzt. Hierzu eignen sich die bekannten Polyesterole, Polyetherole, Polycarbonate und Polycaprolactame.

Die Polyesterole sind zweckmässigerweise überwiegend lineare Polymere mit endständigen OH-Gruppen, bevorzugt solche mit 2 OH-Endgruppen. Die Säurezahl der Polyesterole ist kleiner als 10 und vorzugsweise kleiner als 3. Die Polyesterole lassen sich in einfacher Weise durch Veresterung von aliphatischen Dicarbonsäuren mit 4 bis 12 C-Atomen, vorzugsweise 4 bis 6 C-Atomen, mit aliphatischen Glykolen, bevorzugt Glykolen mit 2 bis 12 C-Atomen oder durch Polymerisation von Lactonen mit 3 bis 6 C-Atomen herstellen. Als aliphatische Dicarbonsäuren lassen sich beispielsweise Glutarsäure, Pimelinsäure, Korksäure, Sebacinsäure, Dodecandisäure und vorzugsweise Adipinsäure und Bernsteinsäure einsetzen. Die Dicarbonsäuren können einzeln oder als Gemische verwendet werden. Zur Herstellung der Polyesterole kann es gegebenenfalls vorteilhaft sein, anstelle der Dicarbonsäuren die entsprechenden Säurederivate, wie Carbonsäureester mit 1 bis 4 Kohlenstoffatomen im Alkoholrest, Carbonsäureanhydride oder Carbonsäurechloride zu verwenden. Beispiele für geeignete Glykole sind Diethylenglykol, Pentandiol, Decandiol-1,10 und 2,2,4-Trimethylpentandiol-1,5. Vorzugsweise verwendet werden Ethandiol-1,2, Butandiol-1,4, Hexandiol-1,6 und 2,2-Dimethylpropandiol-1,3. Je nach den gewünschten Eigenschaften der Polyurethane können die Polyole allein oder als Mischungen in verschiedenen Mengenverhältnissen verwendet werden. Als Lactone für die Herstellung der Polyesterole eignen sich α,α-Dimethyl-β-propiolacton, γ-Butyrolacton und vorzugsweise ε-Caprolacton.

Die Polyetherole sind im wesentlichen lineare, endständige Hydroxylgruppen aufweisende Substanzen, die Etherbindungen enthalten und ein Molekulargewicht von etwa 600 bis 4000, vorzugsweise von 1000 bis 2000, besitzen. Geeignete Polyetherole können leicht durch Polymerisation von cyclischen Ethern, wie Tetrahydrofuran oder durch Umsetzung von einem oder mehreren Alkylenoxiden mit 2 bis 4 Kohlenstoffatomen im Alkylenrest mit einem Startermolekül, das zwei aktive Wasserstoffatome gebunden enthält, hergestellt werden. Als Alkylenoxide seien beispielsweise genannt: Ethylenoxid, 1,2-Propylenoxid, Epichlorhydrin, 1,2- und 2,3-Butylenoxid.

Die Alkylenoxide können einzeln, alternierend nacheinander oder als Mischungen verwendet werden. Als Startermoleküle kommen beispielsweise in Betracht: Wasser, Glykole, wie Ethylenglykol, Propylenglykol, Butandiol-1,4 und Hexandiol-1,6, Amine, wie Ethylendiamin, Hexamethylendiamin und 4,4'-Diamino-diphenylmethan und Aminoalkohole, wie Ethanolamin. Ebenso die Polyesterole können auch die Polyetherole allein oder in Mischungen verwendet werden.

Als Baustein 3.IB werden Diole mit 2 bis 18 Kohlenstoffatomen, vorzugsweise 2 bis 6 C-Atomen, eingesetzt, so zum Beispiel Ethandiol-1,2, Propandiol-1,3, Butandiol-1,4, Hexandiol-1,6, Pentandiol-1,5, Decandiol-1,10, 2-Methyl-1,3-propandiol, 2,2-Dimethyl-1,3-propandiol, 2,2-Dimethyl-1,4-butandiol, 2-Methyl-2-butyl-1,3-propandiol, Hydroxypivalinsäureneopentylglykolester, Diethylenglykol, Trietyhlenglykol und Methyldiethynolamin.

Im Rahmen der Herstellung der OH-gruppenhaltigen Polyharnstoffurethane hat es sich hinsichtlich besonderer Eigenschaften der erfindungsgemässen Aufzeichnungsträger als zweckmässig erwiesen, für die Bausteine 1.IB ganz oder teilweise Diamine mit 2 bis 15 Kohlenstoffatomen wie Ethylendiamin, 1,6-Hexamethylendiamin, 4,9-Dioxadodecan-1,12-diamin, 4,4'-Diaminodiphenylmethan oder Aminoalkohole wie z.B. Monoethanolamin, Monoisopropanolamin und 4-Methyl-4-aminopentanol-2 einzusetzen.

In gleicher Weise können als Bausteine 3.IB die genannten Diole auch ganz oder teilweise durch Wasser oder die nachstehend auch als Bausteine 1.IC angeführten primären oder sekundären Aminoalkohole ersetzt werden.

Diese Aminoalkohole (Baustein 3.IC) mit 2 bis 20, vorzugsweise 3 bis 6 Kohlenstoffatomen, sind u.a. Monoethanolamin, Methylisopropanolamin, Ethylsopropanolamin, Methylethanolamin, 3-Aminopropanol, 1-Ethylaminobutanol-2, 4-Methyl-4-aminopentanol-2, N-(2-Hydroxyethyl)anilin. Sekundäre Aminoalkohole sind besonders geeignet, da durch ihre Anlagerung am Kettenende die Löslichkeit der Polymeren verbessert wird. Als besonders günstig haben sich Methylethanolamin, Diethanolamin und Diisopropanolamin erwiesen.

Als Triole (Baustein 3.ID) werden Verbindungen mit 3 bis 18, vorzugsweise 3 bis 6 C-Atomen, angewandt. Beispiele für entsprechende Triole sind Glycerin, Trimethylolpropan und Hexantriol. Geeignet sind auch niedermolekulare Umsetzungsprodukte, z.B. aus Glycerin oder Trimethylolpropan mit Ethylenoxyd und/oder Propylenoxyd. Das Vorhandensein von Triolen bei der Polyaddition führt zu einer Verzweigung des Endproduktes, was sich, sofern keine örtliche Vernetzung auftritt, positiv auf die mechanischen Eigenschaften des Polyurethans auswirkt.

Zur Bildung der OH-gruppenhaltigen Polyharnstoffurethane werden die unter 3.I genannten Bausteine mit aliphatischen, cycloaliphatischen oder aromatischen Diisocyanaten mit 6 bis 30 Kohlenstoffatomen (Baustein 3.II) umgesetzt. Zu diesem Zweck eignen sich besonders Verbindungen wie Toluylen-2,4-diisocyanat, Toluylen-2,6-diisocyanat, m-Phenylendiisocyanat, 4-Chlor-1,3-Phenylendiisocyanat, 1,5-Naphtylendiisocyanat, 1,6-Hexamethylendiisocyanat, 1,4-Cyclohexylendiisocyanat und 1,5-Tetrahydronaphtylendiisocyanat, Diphenylmethandiisocyanat, Dicyclohexylmethandiisocyanat oder Isophorondiisocyanat. Die OH-gruppenhaltigen Polyurethane auf Basis von Toluylendiisocyanat und Isophorondiisocyanat zeichnen sich durch ihre gute Löslichkeit in Tetrahydrofuran und Dioxan aus.

Das Verhältnis der Bausteine 3.I und 3.II zueinander kann von 1,20 bis 13 Mol Diisocyanat je Mol Polydiol bei Verwendung von 0,2 bis 10, vorzugsweise 0,5 bis 5 Mol des geradkettigen aliphatischen Diols mit 2 bis 18 C-Atomen und gegebenenfalls 0,01 bis 1 Mol, vorzugsweise 0,15 bis 0,5 Mol, Triol variiert werden, wobei die Menge des verwendeten geradkettigen Diols teilweise von dem Molekulargewicht des verwendeten Polydiols abhängt. Die Menge des angewandten Isocyanats sollte zu 5 bis 35% im Unterschuss, bezogen auf die Mengen der NH- oder hydroxylhaltigen Verbindungen vorliegen, so dass am Ende der Reaktion praktisch kein freies, nicht umgesetztes Isocyanat, aber freie, nicht umgesetzte Hydroxylgruppen verbleiben. Aus praktischen und lacktechnischen Gründen ist es jedoch häufig zweckmässig, in einer Vorreaktion der Bausteine 3.IA, 3.IB, 3.IC und 3.II einen Diisocyanatüberschuss von 5 bis 40%, bevorzugt 10 bis 30%, bezogen auf die zur vollständigen Umsetzung der Reaktionsteilnehmer erforderliche Menge, zu verwenden, so dass das Verhältnis der Zahl der eingesetzten Hydroxylgruppen zur Zahl der Isocyanatgruppen in dieser Reaktionsstufe ungefähr 1:1,5 bis 1:1,4 vorzugsweise ungefähr 1:1,1 bis 1:1,30 beträgt. In der zweiten Reaktionsstufe wird dann eine dem NCO-Gehalt entsprechende NH-äquivalente Menge des Bausteins 3.IC, d.h. 0,1 bis 4, vorzugsweise 0,3 bis 2,5 Mol je Mol des Bausteins 3.IA, zugesetzt, bzw. das NCO-Präpolymere wird zum Aminoalkohol gegeben, so dass die Aminogruppen mit dem Isocyanat reagieren. Dabei soll eine OH-Funktionalität von 4 erreicht werden. Dieser Aufbau ist für die Filmbildung und für die abschliessende Vernetzung des OH-gruppenhaltigen Polyurethans mit dem Polyisocyanat von Vorteil. Wird in dieser zweiten Reaktionsstufe ein geringer Unterschuss an NH- bzw. $NH_2$-Gruppen gegenüber den NCO-Gruppen angeboten, dann wird ein Teil des Aminoalkohols in das Molekül eingebaut und ergibt je nach Aminoalkohol eine Verzweigungsstelle. Verwendet man einen Überschuss an NH-Gruppen, dann wird der Aminoalkohol erst bei der Vernetzungsreaktion völlig in den Polymerverband eingebaut. Damit ist es durch die Auswahl, d.h. durch Variation der Endgruppen, möglich, das Polymere den jeweiligen Anforderungen, wie die Fähigkeit zur Filmbildung und zur Dispergierung, anzupassen.

Die so aufgebauten thermoplastischen, elastischen OH-gruppenhaltigen Polyharnstoffurethane werden bevorzugt in Lösung nach dem 2-Stufen-Verfahren, gegebenenfalls in Gegenwart von Katalysatoren und anderen Hilfsmitteln und/oder Zusatzstoffen hergestellt. Diese Produkte nach dem lösungsmittelfreien Batch-Verfahren herzustellen, ist auch möglich. Da sich aber aufgrund der eventuellen Anwesenheit des Triols und der Reaktion von Amin mit NCO-Gruppen bei der Substanzpolyaddition zumindest teilweise Gel-Teilchen bilden, wird meist in Lösung gearbeitet. Allgemein wird bei der Lösungspolyaddition die Gefahr einer örtlichen Übervernetzung, wie sie bei der Substanzpolyaddition auftritt, vermieden.

Als Lösungsmittel für die Herstellung der Polyurethane werden vorzugsweise cyclische Ether, wie Tetrahydrofuran und Dioxan, und cyclische Ketone, wie Cyclohexanon, verwendet. Selbstverständlich können je nach Anwendungsgebiet die Polyurethane auch in anderen stark polaren Lösungsmitteln, wie Dimethylformamid, N-Methylpyrrolidon, Dimethylsulfoxid oder Ethylglykolacetat gelöst werden. Ebenso ist es möglich, die genannten Lösungsmittel mit Aromaten, wie Toluol oder Xylol und Estern, wie Ethyl- oder Butylacetat, zu mischen.

Als geeignete Katalysatoren zur Herstellung der Polyurethane und für die Vernetzungsreaktion seien beispielhaft genannt: tert. Amine, wie Triethylamin, Triethylendiamin, N-Methyl-pyridin und N-Methyl-mopholin, Metallsalze, wie Zinnoctoat, Bleioctoat und Zinkstearat und organische Metallverbindungen, wie Dibutylzinndilaurat. Die geeignete Katalysatormenge ist abhängig von der Wirksamkeit des in Frage kommenden Katalysators. Im allgemeinen hat es sich als zweckmässig erwiesen, 0,005 bis 0,3 Gewichtsteile, vorzugsweise 0,01 bis 0,1 Gewichtsteile für jeweils 100 Gewichtsteile Polyurethan zu verwenden.

Beim 2-Stufen-Polyadditionsverfahren wird das Diisocyanat vorgelegt, dann werden die Bausteine 3.IA, 3.IB und 3.ID und gegebenenfalls der Katalysator und die Hilfs- und Zusatzstoffe in Lösungsmittel bei Temperaturen von 20 bis 90° C, vorzugsweise 30 bis 70° C, in 0,5 bis 5 Stunden zugegeben. Die Komponenten werden bis zum gewünschten NCO-Gehalt umgesetzt, dann wird in der 2. Stufe der Baustein 3.IC zugesetzt oder der Baustein 3.IC wird vorgelegt und das Polymere zugegeben. Beim 2-Stufen-Verfahren wird in der ersten Stufe mit einem NCO-Überschuss, gegenüber den Bausteinen 3.IA, 3.IB und 3.ID, gearbeitet.

Die weitere Verarbeitung des aus den Komponenten 1, 2 und 3 bestehenden Bindemittelgemisches mit magnetischen Materialien und Hilfsstoffen zu den erfindungsgemässen magnetischen Aufzeichnungsträgern erfolgt in an sich bekannter Weise.

Als anisotrope magnetische Materialien können die an sich bekannten verwendet werden, die die Eigenschaften der resultierenden Magnetschichten wesentlich beeinflussen, wie zum Beispiel Gamma-Eisen(III)-oxid, feinteiliger Magnetit, ferromagnetisches undotiertes oder dotiertes Chromdioxid oder kobaltmodifiziertes Gamma-Eisen(III)-oxid.

Bevorzugt sind nadelförmiges Gamma-Eisen-(III)-oxid sowie ferromagnetisches Chromdioxid. Die Teilchengrösse beträgt im allgemeinen 0,2 bis 2 µm, bevorzugt ist der Bereich von 0,3 bis 0,8 µm.

In an sich bekannter Weise können die Magnetschichten ferner in kleinen Mengen Zusätze wie Dispergiermittel und/oder Gleitmittel, aber auch Füllstoffe enthalten, die bei der Dispergierung der Magnetpigmente oder bei der Herstellung der Magnetschicht zugemischt werden. Beispiele solcher Zusätze sind Fettsäuren oder isomerisierte Fettsäuren, wie Stearinsäure oder deren Salze mit Metallen der ersten bis vierten Hauptgruppe des Periodensystems der Elemente, amphotere Elektrolyte, wie Lecithin sowie Fettsäureester oder Wachse, Siliconöle, Russ, Copolymerisate auf Basis von hydrophilen ethylenisch ungesättigten Monomeren usw. Die Menge der Zusätze ist die an sich übliche, sie liegt im allgemeinen unter 10 Gew.-%, bezogen auf die Magnetschicht.

Das Mengenverhältnis von magnetischem Material zu Bindemittel in den erfindungsgemässen Aufzeichnungsmaterialien liegt zwischen 1 bis 10 und insbesondere 3 bis 6 Gewichtsteilen magnetisches Material auf ein Gewichtsteil des Bindemittelgemisches. Es ist ein besonderer Vorteil, dass aufgrund des vorzüglichen Pigmentbindevermögens der speziellen Polyurethane hohe Magnetmaterialkonzentrationen in den Magnetschichten möglich sind, ohne dass die mechanisch-elastischen Eigenschaften verschlechtert oder die Anwendungseigenschaften merklich in Mitleidenschaft gezogen werden.

Als nichtmagnetische und nichtmagnetisierbare Träger lassen sich die üblichen starren oder flexiblen Trägermaterialien verwenden, insbesondere Folien aus linearen Polyestern, wie Polyethylenterephthalat, im allgemeinen in Stärken von 4 bis 200 µm. In neuerer Zeit ist auch die Anwendung von Magnetschichten auf Papierträgern für Zwekke der mittleren Datentechnik bedeutend geworden; auch hierfür lassen sich die erfindungsgemässen Beschichtungsmassen vorteilhaft verwenden. Zur Verbesserung der Haftung können diese gegebenenfalls mit einer Haftschicht versehen werden.

Die Herstellung der erfindungsgemässen magnetischen Aufzeichnungsträger kann in bekannter Weise erfolgen. Zweckmässig wird die in einer Dispergiermaschine, z.B. einer Topfkugelmühle oder einer Rührwerksmühle, aus dem magnetischen Material und einer Lösung der Bindemittel unter Zusatz von Dispergiermitteln und anderen Zusätzen hergestellte Magnetpigmentdispersion nach dem Zumischen des Polyisocyanatvernetzers filtriert und mit der üblichen Beschichtungsmaschine, z.B. mittels eines Linealgiessers, auf den nichtmagnetischen Träger aufgetragen. Zur Erzielung von hohen Ela- und Magnetwerten bei einer kürzeren Dispergierzeit ist es von Vorteil, die Vordispergierung mit der Komponente 3 durchzuführen und die Nachdispergierung mit Komponenten 1 und 2 durchzuführen oder nach der Dispergierung einzurühren. Dieses Verfahren bietet sich an, denn die genannten Komponenten 1 und 2 sind mit der Komponente 3 gut verträglich. In der Regel erfolgt eine magnetische Ausrichtung, bevor die flüssige Beschichtungsmischung auf dem Träger getrocknet wird; letzteres geschieht zweckmässigerweise in 2 bis 5 min bei Temperaturen von 50 bis 90 °C. Die Magnetschichten können auf üblichen Maschinen mittels Hindurchführen zwischen geheizten und polierten Walzen, gegebenenfalls bei Anwendung von Druck und Temperaturen von 25 bis 100 °C, vorzugsweise 60 bis 80 °C, geglättet und verdichtet werden. Die Dicke der Magnetschicht beträgt im allgemeinen 2 bis 20 µm, vorzugsweise 4 bis 10 µm. Im Falle der Herstellung von Magnetbändern werden die beschichteten Folien in der Längsrichtung in den üblichen, meist nach Zoll festgelegten Breiten geschnitten.

Wesentlich für die vorteilhaften Eigenschaften der erfindungsgemässen magnetischen Aufzeichnungsträger ist die Vernetzung des Polyurethanbindemittels mit Polyisocyanaten. Für die Vernetzung kann eine Vielzahl organischer Di-, Tri- oder Polyisocyanate oder Isocyanatprepolymerer bis zu einem Molgewicht von 10 000, vorzugsweise zwischen 500 und 3000, verwendet werden. Bevorzugt sind Polyisocyanate, die mehr als 2 NCO-Gruppen pro Molekül tragen. Als besonders geeignet haben sich Polyisocyanate auf Basis von Toluylendiisocyanat, Hexamethylendiisocyanat oder Isophorondiisocyanat, die durch Polyaddition an Di- und Triole oder durch Biuret- und Isocyanuratbildung entstehen, erwiesen. Besonders günstig ist ein Additionsprodukt von Toluylendiisocyanat an Trimethylolpropan und Diethylenglykol.

Die Menge an zugesetzten Polyisocyanatkomponente entspricht, bezogen auf die OH-Gruppen der zu vernetzenden Polyurethanbindemittel, einem OH:NCO-Verhältnis von 1:0,3 bis 1:2,0, vorzugsweise von 1:0,5 bis 1:1,5.

Die erfindungsgemässen magnetischen Aufzeichnungsträger weisen gegenüber solchen, welche mit dem Stand der Technik entsprechenden Polyurethane und Polyurethanharnstoff enthaltenden Bindemittelmischungen hergestellt sind, eine verbesserte Haftung bei gleichzeitiger Klimabeständigkeit mit guten elektroakustischen Eigenschaften, insbesondere sowohl hinsichtlich der Höhen- und Tiefenaussteuerbarkeit als auch der Empfindlichkeit, auf. Ausserdem ist wesentlich, dass sich damit die bekannten magnetischen Materialien in üblichen Dispergiereinrichtungen leicht und vor allem mit sehr geringem Zeit- und Energieaufwand zu homogenen hochpigmentierten Dispersionen verarbeiten lassen. Hervorzuheben ist weiterhin der bis zu 40% geringere Lösungsmittelbedarf beim Dispergierprozess. Damit können in vereinfachter und verkürzter Arbeitsweise magnetisch und damit auch elektroakustisch wesentlich verbesserte magnetische Aufzeichnungsträger erhalten werden.

Die in den nachstehenden Beispielen und Vergleichsversuchen genannten Teile und Prozente beziehen sich, soweit nicht anders angegeben, auf das Gewicht. Volumenteile verhalten sich zu Gewichtsteilen wie Liter und Kilogramm.

Beispiel A: Polymer A (Komponente 3)

100,05 g Toluylendiisocyanat, gelöst in 107 g Tetrahydrofuran, wurden auf 60 °C erhitzt und mit einem Tropfen Dibutylzinndilaurat versetzt. Dazu wurden innerhalb von 2,5 Stunden 150 g eines OH-gruppenhaltigen Polyesters aus Adipinsäure und Butandiol-1,4 mit einem Molekulargewicht von 1000 und 41,2 g Hexandiol gelöst in 200 g Tetrahydrofuran gegeben. Nach einer Stunde wurde nochmals ein Tropfen Dibutylzinndilaurat zugegeben. Nach Erreichen eines NCO-Gehaltes von 1,05% wurde auf 45 °C abgekühlt und danach 15,75 g Diethanolamin zugesetzt. Das resultierende Produkt wies einen Feststoffgehalt von 50%, eine OH-Zahl von 55 und einen K-Wert von 24 bis 28 auf.

Beispiel 1

In einer Stahlkugelmühle von 6 l Rauminhalt, gefüllt mit 8 kg Stahlkugeln mit einem Durchmesser zwischen 4 und 6 mm, wurden 873 g eines Eisenoxidpigmentes mit der Koerzitivfeldstärke von 26 kA/m, 27 g $\alpha$-$Fe_2O_3$, 820 g eines Lösungsmittelgemisches, bestehend aus gleichen Teilen Tetrahydrofuran und Dioxan, 36 g eines Dispergiermittels auf der Basis einer Mischung eines Monophosphorsäureesters und dem Salz einer Sulfobernsteinsäure, 80 g einer 50%igen Lösung des Polymers A (Komponente 3) in THF, 720 g einer 12,5%igen Lösung eines Polyurethanelastomeren gemäss DE-AS 2753694 in gleichen Teilen Tetrahydrofuran und Dioxan, 144 g einer 25%igen Lösung eines Copolymerisats aus 91% Vinylchlorid, 3% Vinylacetat und 6% Vinylalkoholgrundeinheiten im gleichen Lösungsmittelgemisch, 5 g n-Butylstearat, 1 g eines handelsüblichen Siliconöls, 2 g Hydrochinin und 9 Isostearinsäure 50 Stunden lang dispergiert. Die erhaltene Dispersion wurde unter Druck durch ein Filter mit 5 µm filtriert und anschliessend auf eine 33 µm dicke Polyethylenterephthalatfolie mittels eines üblichen Linealgiessers aufgetragen. Unmittelar vor dem Auftragen wurden der Dispersion unter kräftigem Rühren je kg Dispersion 7 g einer 75%igen Lösung eines Triisocyanats aus 3 Mol Toluylendiisocyanat und 1 Mol Trimethylolpropan zugesetzt. Die beschichtete Folie wurde nach Durchlaufen eines Magnetfeldes zur Ausrichtung der Magnetpigmentteilchen bei Temperaturen zwischen 50 und 90 °C getrocknet und gleichzeitig die Magnetschicht zwischen 70 °C beheizten Walzen unter einem Liniendruck von 200 kg/cm geglättet und an-

schliessend in 5,08 cm (2″) breite Bänder geschnitten.

Die Messung der magnetischen Eigenschaften wurden in einem Messfeld von 160 kA/m durchgeführt und die Oberflächenrauhigkeit wurde als gemittelte Rauchtiefe $R_z$ gemäss DIN 4768, Blatt 1, bestimmt. Die Bestimmung der elektroakustischen Werte zeigte, dass die Bänder der geforderten Norm für Studiobänder entsprachen.

| | |
|---|---|
| Remanente Magnetisierung: | 140 mT |
| $R_z$ nach Beschichtung: | 0,6 µm |
| $R_z$ nach Glättung: | 0,25 µm |

Die Abriebeigenschaften der Magnetschichten wurden dadurch bestimmt, dass ein Magnetband auf einem Studiolaufwerk bei 38 cm/s bei ständigem Vor- und Rücklauf 20 Stunden betrieben wird, und dann die Bandablagerungen an Ton- und Löschkopf visuell bewertet werden. Die Stärke der Ablagerungen werden in einer Notenskala von Note 1: keine Ablagerung bis Note 6: sehr starke Ablagerung festgehalten. Die Messung ergab:

Ablagerungswerte: 1–2.

Vergleichsversuch 1a

Es wurde wie in Beispiel 1 beschrieben verfahren, jedoch bestand die Bindemittelmischung aus 1000 g der 12,5%igen Lösung des Polyurethanelastomeren und 216 g der 25%igen Lösung des Copolymerisats der jeweils in Beispiel 1 angegebenen Art. Ebenso fand keine Zugabe des Triisocyanats zur Vernetzung statt. Die Messungen ergaben:

| | |
|---|---|
| Remanente Magnetisierung: | 156 mT |
| $R_z$ nach Glättung: | 0,33 µm |
| Ablagerungsnote: | 4–5 |

Vergleichsversuch 1b

Es wurde wie in Vergleichsversuch 1a beschrieben verfahren, jedoch wurde das Bindemittelgemisch durch die in Beispiel 1 angegebene Zugabe des Triisocyanats vernetzt. Die Messungen ergaben:

| | |
|---|---|
| Remanente Magnetisierung: | 143 mT |
| $R_z$ nach Glättung: | 0,35 µm |
| Ablagerungsnote: | 4 |

Beispiel 2

In einer Laborrührwerksmühle mit dem Mahlbehälterinhalt von 0,75 l und 0,6 kg Glaskugeln vom Durchmesser 2 mm wurden 69,7 Teile einer 13%igen Polyurethanlösung in Tetrahydrofuran, hergestellt gemäss DE-AS 2753694, 6,87 Teile einer 50%igen Lösung des Polymers A (Komponente 3), 6 Teile einer 50%igen Lösung eines oxethylierten Phosphorsäureesters, 0,5 Teile Stearinsäure, 13 Teile eines Aluminiumoxidpulvers, 146 Teile eines Lösungsmittelgemisches aus gleichen Teilen Tetrahydrofuran und Dioxan, sowie 100 Teilen ferromagnetischer vorwiegend aus Eisen bestehender Metallteilchen mit einer Koerzitivfeldstärke von 105 kA/m eingewogen. Nach einer Mahlzeit von 18 Stunden wurden ausserdem noch 13,34 Teile der 13%igen Polyurethanlösung sowie 17,3 Teile einer 20%igen Lösung eines Phenoxyharzes in gleichen Teilen Tetrahydrofuran und Dioxan, hergestellt aus Bisphenol A und Epichlorhydrin, das noch 6 Gew.-% Hydroxylgruppen aufweist, und 0,3 Teilen eines handelsüblichen Silikonöls zugesetzt und weitere 8 Stunden gemahlen.

Die erhaltene Dispersion wurde unter Druck durch ein Filter mit 5 µm filtriert und anschliessend auf eine 12 µm dicke Polyethylenterephthalatfolie mittels eines üblichen Linealgiessers in einer Schichtdicke von 4 µm aufgetragen. Unmittelbar vor dem Auftragen wurden der Dispersion unter kräftigem Rühren 23,2 Teile einer 50%igen Lösung eines Triisocyanats aus 3 Mol Toluylendiisocyanat und 1 Mol Trimethylolpropan in Ethylacetat zugesetzt. Die beschichtete Folie wurde nach Durchlaufen eines Magnetfeldes zur Ausrichtung der Magnetpigmentteilchen bei Temperaturen zwischen 50 und 90 °C getrocknet und gleichzeitig die Magnetschicht zwischen 70 °C beheizten Walzen unter einem Liniendruck von 200 kp/cm geglättet und anschliessend in 3,81 mm breite Bänder geschnitten.

Die Messungen ergaben eine Sättigungsmagnetisierung von 300 mT, einen Richtfaktor (Ramanenz längs/quer) von 2,8, eine Ablagerungsnote von 2 und einen Abrieb nach Dauerlauf von 0,2 mg.

Der Abrieb bei Dauerlauf wird in Form des Gewichtsverlustes einer Bandschleife von 95 cm Länge bei einer Bandgeschwindigkeit von 4 m/s nach einer Laufzeit von 1 Stunde über einen Kopfsimulator aus 4 hochglanz-geläppten Strahlrollen gemessen.

Vergleichsversuch 2

Es wurde wie in Beispiel 2 beschrieben verfahren, jedoch bestand die vorgelegte Bindemittelmischung aus 92,3 Teilen der 13%igen Polyurethanlösung und 2,5 Teilen der 20%igen Phenoxyharzlösung sowie aus weiteren 23,2 Teilen der Phenoxyharzlösung nach der ersten Dispergierstufe. Die weitere Verarbeitung und die Messungen entsprechen ebenfalls denen des Beispiels 2.

| | |
|---|---|
| Sättigungsmagnetisierung: | 260 mT |
| Richtfaktor: | 2,3 |
| Ablagerungsnote: | 3,5 |
| Abrief nach Dauerlauf: | 0,5 mg |

**Patentanspruch**

Magnetische Aufzeichnungsträger aus einem nichtmagnetischen Trägermaterial, das mit einer Magnetschicht aus in Bindemitteln und Zusatzstoffen dispergiertem, feinteiligem anisotropem Material versehen ist und wobei das Bindemittel ein Gemisch aus einem hochmolekularen, thermoplastischen, in Tetrahydrofuran löslichen, linearen Polyurethan, dessen unpigmentierter Film eine Reissfestigkeit zwischen 40 und 95 $N/mm^2$ und eine Reissdehnung von 100 bis 1400% aufweist, einem niedermolekularen OH-gruppenhaltigen Polyharnstoffurethan, das als unpigmentierter mit Polyisocyanat vernetzter Film eine Reissfestigkeit von grösser 15 N/mm², eine Reissdehnung von grösser 30%, einen E-Modul von grösser 150 N/mm² und eine Pendelhärte von 30 bis 140 s aufweist, und einem weiteren physikalischen trocknenden Bindemittel ist, wobei das Gemisch aus

1. 20 bis 70 Gew.-% eines hochmolekularen, thermoplastischen, in Tetrahydrofuran löslichen linearen Polyurethans mit einem Molekulargewicht zwischen 40000 und 150000, welches aus

1.A 1 Mol eines Polyesterols mit einem Molekulargewicht zwischen 400 und 4000,

1.B 0,3 bis 15 Mol eines geradkettigen aliphatischen Diols mit 2 bis 10 Kohlenstoffatomen,

1.C 0 bis 1,5 Mol eines Triols mit 3 bis 10 Kohlenstoffatomen und

1.D 1,25 bis 17 Mol eines Diisocyanats mit 6 bis 30 Kohlenstoffatomen, wobei die Menge an NCO-Gruppen etwa äquivalent der Menge an OH-Gruppen der Summe der Komponenten 1.A bis 1.C ist, hergestellt worden ist,

2. 5 bis 35 Gew.-% eines Polyvinylformalbindemittels mit einem Vinylformalgruppengehalt von mindestens 65%, oder eines Copolymeren aus 50 bis 95 Gew.-% Vinylchlorid und 5 bis 50 Gew.-% eines Mono- oder Diesters eines aliphatischen Diesters eines aliphatischen Diols mit 2 bis 4 Kohlenstoffatomen mit Acrylsäure oder Metharcrylasäure, oder eines Phenoxyharzes, dessen Konstitution der Formel

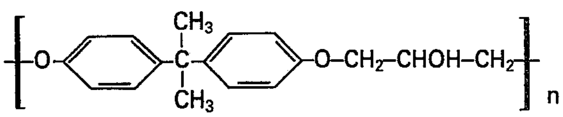

mit n annähernd gleich 100 entspricht, oder eines Di- und/oder Triesters der Cellulose mit mindestens einer Carbonsäure mit 1 bis 4 Kohlenstoffatomen, oder einem Copolymerisat aus 91% Vinylchlorid-, 3% Vinylacetat- und 6% Vinylalkoholgrundeinheiten, und

3. 5 bis 50 Gew.-% eines niedermolekularen OH-gruppenhaltigen Polyharnstoffurethans mit mindestens 4 OH-Gruppen und einer OH-Zahl zwischen 30 und 130 und einem Molekulargewicht zwischen 2000 und 30000, welches aus

3.IA 1 Mol eines Polydiols mit einem Molekulargewicht zwischen 400 und 4000,

3.IB 0,2 bis 10 Mol eines Diols mit 2 bis 18 Kohlenstoffatomen,

3.IC 0,1 bis 4 Mol eines primären oder sekundären Aminoalkohols mit 2 bis 20 Kohlenstoffatomen,

3.ID 0 bis 1 Mol eines Triols und

3.II 1,20 bis 13 Mol eines Diisocyanats mit 6 bis 30 Kohlenstoffatomen, wobei der Anteil der NCO-Gruppen des Diisocyanats, bezogen auf die Komponenten 3.IA bis 3.ID, 65 bis 95% der äquivalenten Menge an OH- und NH-Gruppen beträgt, hergestellt worden ist,

besteht und das hochmolekulare Polyurethan und das niedermolekulare Polyharnstoffurethan mit Polyisocyanaten in einem OH:NCO-Verhältnis von 1:0,3 bis 1:2,0 vernetzt worden sind.

## Claims

A magnetic recording medium which consists of a nonmagnetic base which is provided with a magnetic layer consisting of finely divided anisotropic magnetic material dispersed in binders and additives, and in which the binder is a mixture of a high molecular weight, thermoplastic, linear polyurethane which is soluble in tetrahydrofuran and whose unpigmented film has a tensile strength of from 40 to 95 N/mm² and an elongation at break of from 100 to 1400%, a low molecular weight OH-containing polyurea-urethane which, in the form of an unpigmented film crosslinked with polyisocyanate, has a tensile strength greater than 15 N/mm², an elongation at break greater than 30%, a modulus of elasticity greater than 150 N/mm² and a pendulum hardness of from 30 to 140 s, and a further physically drying binder, wherein the mixture consists of

1. from 20 to 70% by weight of a high molecular weight, thermoplastic linear polyurethane which has a molecular weight of from 40000 to 150000, is soluble in tetrahydrofuran and has been prepared from

1A. 1 mole of a polyesterol having a molecular weight of from 400 to 4000,

1B. from 0.3 to 15 moles of a straight-chain aliphatic diol of 2 to 10 carbon atoms,

1C. from 0 to 1.5 moles of a triol of 3 to 10 carbon atoms and

1D. from 1.25 to 17 moles of a diisocyanate of 6 to 30 carbon atoms, the amount of NCO groups being roughly equivalent to the total amount of OH groups in components 1A to 1C,

2. from 5 to 35% by weight of a polyvinylformal binder containing not less than 65% of vinylformal groups, or of a copolymer of from 50 to 95% by weight of vinyl chloride and from 5 to 50% by weight of a mono- or diester of an aliphatic diol of 2 to 4 carbon atoms with acrylic acid or methacrylic acid, or of a phenoxy resin of the formula

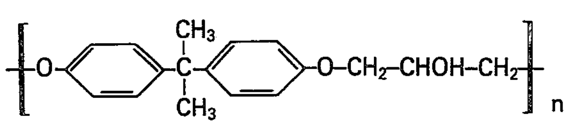

where n is about 100, or of a diester and/or triester of cellulose with one or more carboxylic acids of 1 to 4 carbon atoms, or of a copolymer of 91% of vinyl chloride base units, 3% of vinyl acetate base units and 6% of vinyl alcohol base units, and from 5 to 50% by weight of a low molecular weight OH-containing polyurea-urethane which contains not less than 4 OH groups, has an OH number from 30 to 130 and a molecular weight of from 2000 to 30000 and has been prepared from

3.1A 1 mole of a polydiol having a molecular weight of from 400 to 4000

3.1B from 0.2 to 10 moles of a diol of 2 to 18 carbon atoms,

3.1C from 0.1 to 4 moles of a primary or secondary aminoalcohol of 2 to 20 carbon atoms,

3.1D from 0 to 1 mole of a triol and

3.II from 1.20 to 13 moles of a diisocyanate of 6 to 30 carbon atoms, the amount of NCO groups of the diisocyanate being from 65 to 95%, based on components 3.1A to 3.1D, of the number of equivalents of OH and NH groups,

and the high molecular weight polyurethane and the low molecular weight polyurea-urethane have been crosslinked with polyisocyanates in an OH:NCO ratio of from 1:0.3 to 1:2.0.

**Revendications**

Support d'enregistrement magnétique en un matériau support non magnétique qui est muni d'une couche magnétique en matériau magnétique, anisotrope, finement réparti, disperse dans un liant et des additifs, et le liant étant un mélange d'un polyuréthane linéaire, soluble dans le tétrahydrofurane, thermoplastique, de poids moléculaire élevé, dont le film non pigmenté présente une résistance en traction comprise entre 40 et 95 N/mm$^2$ et allongement en traction de 100 à 1400%, d'un polyuréeuréthane à groupes OH, de faible poids moléculaire qui, sous forme de film réticulé avec du polyisocyanate et non pigmenté, présente une résistance en traction de plus de 15 N/mm$^2$, un allongement en traction de plus de 50%, un module E de plus de 150 N/mm$^2$ et une dureté au pendule de 30 à 140 s, et d'un autre liant séchant physiquement, le mélange étant constitué de:

1. 20 à 70% en poids d'un polyuréthane linéaire soluble dans tétrahydrofurane, thermoplastique, de poids moléculaire élevé, d'un poids moléculaire compris entre 40000 et 150000, qui a été préparé à partir de

1.A 1 mole d'un polyestérol d'un poids moléculaire compris entre 400 et 4000,

1.B 0,3 à 15 moles d'un diol aliphatique à chaîne droite ayant 2 à 10 atomes de carbone,

1.C 0 à 1,5 mole d'un triol de 3 à 10 atomes de carbone et

1.D 1,25 à 17 moles d'un diisocyanate ayant 6 à 30 atomes de carbone, la quantité de groupes NCO, étant à peu près équivalente à la quantité de groupes OH de la somme des composants 1.A à 1.C, et

2. 5 à 35% en poids d'un liant polyvinylformal à teneur en groupes vinylformal d'au moins 65% ou d'un copolymère de 50 à 95% en poids de chlorure de vinyle et 5 à 50% en poids d'un mono-ou diester d'un diol aliphatique ayant 2 à 4 atomes de carbone avec de l'acide acrylique ou méthacrylique, ou d'une résine phénaxy, dont la constitution correspond à la formule.

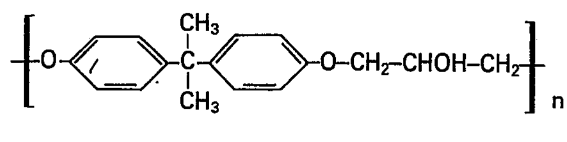

avec n égal à peu près à 100, ou d'un di- et/ou triester de cellulose avec ou moins un acide carboxylique de 1 à 4 atomes de carbone, ou d'un copolymerisat de 91% de motifs de base chlorure de vinyle, 3% de motifs acétate de vinyle et 6% de motifs alcool vinylique.

3. 5 à 50% en poids d'un polyuréeuréthane, à groupes OH, de faible poids moléculaire, ayant au moins 4 groupes OH et d'un indice OH compris entre 30 et 130 et d'un poids moléculaire compris entre 2000 et 30000 qui a été préparé à partir de:

3.IA 1 mole d'un polydiol d'un poids moléculaire compris entre 400 et 4000,

3.IB 0,2 à 10 moles d'un diol ayant 2 à 18 atomes de carbone,

3.IC 0,1 à 4 moles d'un aminoalcool primaire ou secondaire ayant 2 à 20 atomes de carbone,

3.ID 0 à 1 mole d'un triol et

3.II 1,20 à 13 moles d'un diisocyanate ayant 6 à 30 atomes de carbone, la proportion de groupes NCO du diisocyanate, rapportée aux composants 3.IA à 3.ID étant de 65 à 95% de la quantité équivalente en groupes OH et NH

et le polyuréeuréthane à bas poids moléculaire et le polyuréthane à haut poids moléculaire ont été réticulés avec un composant polyisocyanate en un rapport OH/NCO de 1/0,3 à 1/2,0.